# EUROPÄISCHE PATENTSCHRIFT

(11) **EP 2 936 935 B1**
(45) Veröffentlichungstag und Bekanntmachung des Hinweises auf die Patenterteilung: **04.10.2017**
(21) Anmeldenummer: 13830167.6
(22) Anmeldetag: 20.12.2013
(51) Int. Cl.: H05B 33/08, H05B 37/02

(54) **MASTER-SLAVE SYSTEM AUF DER SEKUNDÄRSEITE EINER GALVANISCHEN ISOLATIONSBARRIERE (SELV-BARRIERE) EINES BETRIEBSGERÄTS**
MASTER-SLAVE SYSTEM ON THE SECONDARY SIDE OF A GALVANIC ISOLATION BARRIER (SELV BARRIER) OF AN OPERATING UNIT
SYSTÈME MAÎTRE-ESCLAVE SITUÉ SUR LE CÔTÉ SECONDAIRE D'UNE BARRIÈRE D'ISOLEMENT GALVANIQUE (BARRIÈRE SELV) D'UN APPAREIL DE COMMANDE

(30) Priorität: 21.12.2012 DE 102012224146
(43) Veröffentlichungstag der Anmeldung: 28.10.2015
(73) Patentinhaber: Tridonic GmbH & Co. KG, 6851 Dornbirn (AT)
(72) Erfinder: MAIER, Simon, A-6850 Dornbirn (AT)
(74) Vertreter: Rupp, Christian
(86) Internationale Anmeldenummer: PCT/AT2013/000211
(87) Internationale Veröffentlichungsnummer: WO 2014/094015

(56) Entgegenhaltungen:
- WO-A1-03/065201
- WO-A1-2004/023849
- WO-A1-2011/116404
- WO-A1-2012/136907
- WO-A2-2008/001274
- DE-A1-102009 024 412

## Beschreibung

Die vorliegende Erfindung betrifft ein Betriebsgerät für Leuchtmittel bzw. ein Verfahren zum Betrieb von Leuchtmitteln, die jeweils ein Master-Slave System auf der Sekundärseite einer galvanischen Trennung oder Isolationsbarriere ("SELV-Barriere", wobei SELV im Englischen steht für "Separated Extra Low Voltage") zum Dimmen der Leuchtmittel verwenden. Das Master-Slave System besteht insbesondere aus einem ersten Modul und wenigstens einem zweiten Modul.

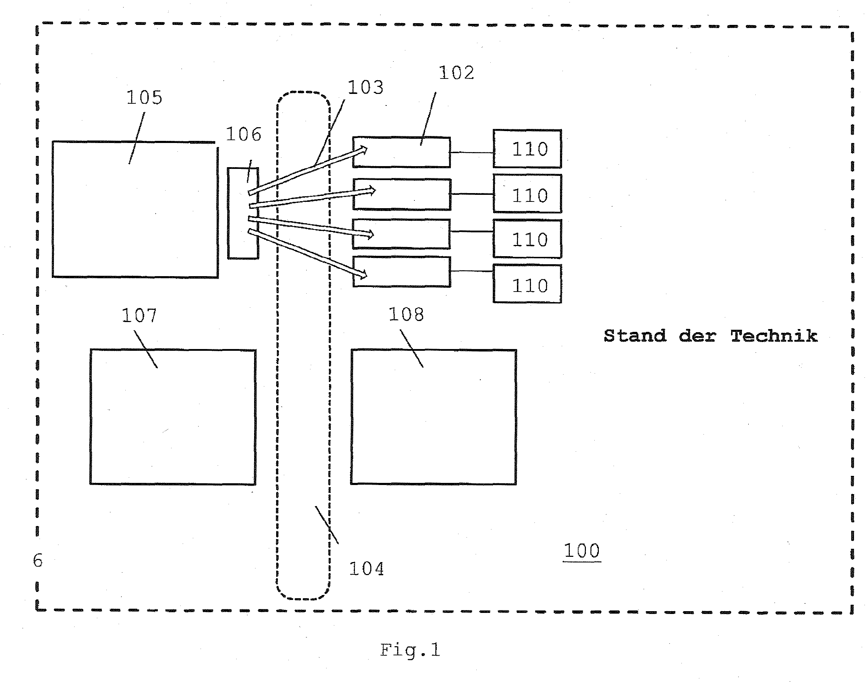

Die Druckschrift WO 2011/116404 A1 offenbart eine induktive Beleuchtungseinrichtung die, galvanisch voneinander getrennt, eine primärseitige Schaltung und eine sekundärseitige Schaltung aufweist, wobei die primärseitige Schaltung zur Versorgung der Sekundärseite und zur Übertragung einer Dimminformation an die Sekundärseite eingerichtet ist und die sekundärseitige Schaltung mehrere parallel angeordnete Module zum Versorgen und Dimmen eines jeweils zugeordneten Leuchtmittels umfasst. Aus dem Stand der Technik sind auch Betriebsgeräte mit SELV-Barrieren (z.B. ein SELV-Konverter) bekannt, die auf der Sekundärseite der SELV-Barriere mehrere parallel angeordnete Konverterstufen aufweisen, beispielsweise einen oder mehrere Buck-Konverter, die das Dimmen eines jeweils zugeordneten Leuchtmittels, insbesondere einer LED-Strecke, veranlassen. In diesen bekannten Betriebsgeräten wird eine Dimminformation zum Dimmen der Leuchtmittel, beispielweise die einzustellende Dimmstufe, von der Primärseite über die SELV-Barriere zu jeder der mehreren Konverterstufen auf der Sekundärseite übertragen. Dies wird zum Beispiel über eine DALI-Kommunikationsverbindung realisiert. Auch bekannt sind Optokoppler oder Transformatoren, um die Dimminformationen über die SELV-Barriere zu übermitteln. Figur 1 zeigt ein Beispiel eines Betriebsgeräts 100 aus dem Stand der Technik. Das Betriebsgerät 100 weist auf der Primärseite (hinsichtlich einer SELV-Barriere 104) eine Leistungsfaktor-Korrekturschaltung 105, ein ASIC 107 und eine Schnittstelle 106 zum Übertragen von Dimminformation 103 über die SELV-Barriere 104 auf. Die Dimminformation 103 wird dabei parallel an Schnittstellen mehrere Konverterstufen 102 übermittelt. Die Konverterstufen 102 steuern mit Hilfe eines ASIC 108 jeweils ein zugeordnetes Leuchtmittel 110 basierend auf der Empfangenen Dimminformation 103. Die Schnittstelle 106 wird wie oben erläutert mittels DALI-Schnittstellen, Optokopplern oder Transformatoren realisiert.

Die in Figur 1 gezeigte, die SELV-Barriere überschreitende Kommunikation von Dimminformationen bzw. Signalen ist allerdings negativ hinsichtlich der Herstellungskosten der Betriebsgeräte. Insbesondere Optokoppler oder Transformatoren stellen hohe Anforderungen an Komponenten zur Überbrückung der SELV-Barriere, was zu hohen Kosten in der Herstellung der Betriebsgeräte führt.

Die vorliegende Erfindung hat die Aufgabe, den bekannten Stand der Technik zu verbessern. Insbesondere ist die Aufgabe der vorliegenden Erfindung, Dimminformation von der Primärseite zu der Sekundärseite einer galvanischen Trennung in einem Betriebsgerät für Leuchtmittel zu ermöglichen, wobei kostspielige Komponenten wie Optokoppler vermieden werden sollen.

Die Aufgabe der Erfindung wird durch die Merkmale der unabhängigen Ansprüche gelöst. Die abhängigen Ansprüche bilden den Kerngedanken der Erfindung vorteilhaft weiter.

Insbesondere betrifft die vorliegende Erfindung ein Betriebsgerät für wenigstens ein Leuchtmittel, insbesondere Konverter für wenigstens eine LED-Strecke, das umfasst eine primärseitige Schaltung und eine sekundärseitige Schaltung, die durch eine galvanische Trennung voneinander getrennt sind, wobei die Leuchtmittel sekundärseitig bzgl. der galvanischen Trennung versorgbar sind und die Primärseite zum Anschluss an eine Spannungsversorgung, insbesondere einer Netzspannung eingerichtet ist, wobei die sekundärseitige Schaltung ein erstes Modul und wenigstens ein zweites Modul zum Dimmen eines jeweils zugeordneten Leuchtmittels umfasst, wobei die primärseitige Schaltung und das erste Modul Schnittstellen aufweisen zur Einrichtung eines unidirektionalen oder bidirektionalen drahtlosen Kanals, wobei das erste Modul dazu ausgelegt ist, eine Dimminformation über den drahtlosen Kanal zu empfangen und die empfangene Dimminformation an das wenigstens eine zweite Modul weiterzugeben.

Da die Dimminformation über den drahtlosen Kanal über die galvanische Trennung (d.h. die SELV-Barriere) übertragen wird, sind keinerlei kostenaufwendige Optokoppler, Transformatoren etc. notwendig. Das erste Modul ist vorzugsweise ein Master-Modul und das eine oder mehrere zweite Modul ist vorzugsweise ein Slave-Modul. Alle Module sind vorzugsweise Konverterstufen. Das wenigstens eine zweite Modul kann einfacher realisiert werden, als eine herkömmliche Konverterstufe, da dieses zweite Modul die Dimminformation nicht von der Primärseite der SELV-Barriere empfangen muss. Insgesamt sind deshalb weniger Komponenten notwendig, um die Dimminformation über die SELV-Barriere zur Sekundärseite zu übermitteln. Daher kann das Betriebsgerät der vorliegenden Erfindung kostengünstiger produziert werden.

Zwischen dem ersten Modul und dem wenigstens einen zweiten Modul kann ein lokaler Bus zum Kommunizieren des ersten Moduls mit dem wenigstens einen zweiten Modul angeordnet sein.

Der lokale Bus kann auf einer Leiterplatte des Betriebsgeräts ausgebildet sein. Über den lokalen Bus kann die Dimminformation von dem ersten Modul an das wenigstens eine zweite Modul weitergegeben werden. Ein lokaler Bus ist einfach und kostengünstig in das Betriebsgerät einzubauen.

Vorzugsweise ist das erste Modul dazu ausgelegt, den Bus mit der Dimminformation zu beaufschlagen.

Durch die Beaufschlagung des Bus mit der Dimminformation kann die Dimminformation schnell an eine Vielzahl von zweiten Modulen übermittelt werden. Die zweiten Module können die Dimminformationen mittels einfacherer Schaltungen erkennen, als wenn diese von Primärseite der SELV-Barriere empfangen werden müsste.

Zwischen dem ersten Modul und dem wenigstens einen zweiten Modul kann auch eine drahtlose Verbindung zum Kommunizieren des ersten Moduls mit dem wenigstens einen zweiten Modul eingerichtet sein.

Die drahtlose Verbindung zwischen dem ersten Modul und dem wenigstens einen zweiten Modul erlaubt es, die Dimminformation einfach und kostengünstig zu übermitteln. Zur Einrichtung der drahtlosen Verbindung können die Module mit Antennen versehen sein. Antennen zur drahtlosen Kommunikation, insbesondere Antennen zur Funkkommunikation, sind klein und billig und helfen deshalb die Kosten und die Abmessungen des Betriebsgeräts zu reduzieren. Vorzugsweise sind die Antennen in Leiterplatten der Schaltungen der Module ausgebildet.

Der Bus bzw. die drahtlose Verbindung kann zur unidirektionalen Kommunikation von dem ersten Modul zu dem wenigstens einen zweiten Modul ausgelegt sein.

Da in diesem Fall das wenigstens eine zweite Modul keine Information senden muss, sondern lediglich die Dimminformation über den Bus oder die drahtlose Verbindung empfangen muss, kann das wenigstens eine zweite Modul einfacher als Konverterstufen aus dem Stand der Technik realisiert werden. Es kann insbesondere kleiner und kostengünstiger hergestellt werden.

Der Bus bzw. die drahtlose Verbindung kann auch zur bidirektionalen Kommunikation zwischen dem ersten Modul und dem wenigstens einen zweiten Modul ausgelegt sein.

Durch die bidirektionale Kommunikation ist es dem wenigstens einem zweiten Modul möglich, Informationen an das erste Modul zurückzuführen.

Vorzugsweise sind das erste Modul und das wenigstens eine zweite Modul dazu ausgelegt, die Dimminformation und/oder wenigstens einen Betriebsparameter auszutauschen.

Das wenigstens eine zweite Modul kann beispielsweise Betriebsparameter an das erste Modul übersenden. Die Betriebsparameter können dann beispielsweise über den drahtlosen Kanal auf die Primärseite des Betriebsgeräts zurück gesendet werden und können dort als ein Regelwert für die Regelung der Dimminformation verwenden werden. Das heißt, die Dimminformation kann basierend auf den Betriebsparametern angepasst und erneut übermittelt werden. Als Betriebsparameter kann beispielweise ein Strom durch ein Leuchtmittel, eine Spannung an einem Leuchtmittel, eine Temperatur, eine Leuchtstärke, ein Widerstandswert etc. rückgeführt werden. Dadurch kann eine genauere Einstellung einer Dimmstufe der Leuchtmittel durch die übermittelte Dimminformation erzielt werden.

Das erste Modul und das wenigstens eine zweite Modul können auch dazu ausgelegt sein, leistungsgebunden zu kommunizieren.

Vorzugsweise erfolgt eine leistungsgebundene Kommunikation über eine Schaltinformation auf einer Versorgungsspannung des ersten Moduls und des wenigstens einen zweiten Moduls.

Die Versorgungsspannung ist vorzugsweise eine Gleichspannung. Die Schaltinformation kann beispielweise eine der Versorgungsspannung überlagerte Wechselspannung sein. Es kann beispielweise ein AC/Powerline Konzept verwendet werden. Die leistungsgebundene Kommunikation über Leitungen der Versorgungsspannung der Module ist eine kostengünstige Alternative, da weder eine drahtlose Verbindung noch ein Bus die Module verbinden muss. Eine Versorgungsleitung ist sowieso schon vorgesehen und spart deshalb zusätzliche Kosten.

Vorzugsweise sind das erste Modul und das wenigstens eine zweite Modul Konverterstufen.

Insbesondere sind die Konverterstufen Buck-Konverter, wobei das erste Modul als Master-Konverter und das wenigstens eine zweite Modul als Slave-Konverter fungiert.

Vorzugsweise ist der drahtlose Kanal ein Funkkanal, der durch Funkschnittstellen eingerichtet ist.

Ein Funkkanal ist einfach durch Funkschnittstellen, wie beispielweise Antennen, zu realisieren, die klein und kostengünstig verbaut werden können.

Vorzugsweise liegt der Funkkanal innerhalb eines vorzugsweise metallischen Gehäuses des Betriebsgeräts.

Da der Funkkanal innerhalb des vorzugsweise metallischen Gehäuses angeordnet ist, findet über den Funkkanal eine rein interne Kommunikation des Betriebsgeräts statt. Da das Gehäuse vorzugsweise aus Metall gefertigt ist, können keine Störungen nach außen verursacht werden. Die interne Kommunikation ist zuverlässig und benötigt aufgrund der kuren zu überbrückenden Reichweiten lediglich eine geringe Funkleistung (vorzugsweise ist ein Bereich der Funkleistung von 1 bis 100 mW, mehr bevorzugt ein Bereich von 1 bis 10 mW vorgesehen).

Die vorliegende Erfindung betrifft auch ein Betriebsgerät für wenigstens ein Leuchtmittel, insbesondere Konverter für wenigstens eine LED-Strecke, das umfasst eine primärseitige Schaltung und eine sekundärseitige Schaltung die durch eine galvanische Trennung voneinander getrennt sind, wobei die Leuchtmittel sekundärseitig bzgl. der galvanischen Trennung versorgbar sind und die Primärseite zum Anschluss an eine Spannungsversorgung, insbesondere einer Netzspannung eingerichtet ist, wobei die sekundärseitige Schaltung ein erstes Modul und wenigstens ein zweites Modul zum Dimmen eines jeweils zugeordneten Leuchtmittels umfasst, wobei das erste Modul wenigstens einen Sensor umfasst und dazu ausgelegt ist, eine Dimminformation basierend auf erfasster Sensorinformation zu bestimmen und die bestimmte Dimminformation an das wenigstens eine zweite Modul weiterzugeben.

Dieses Betriebsgerät stellt eine noch effizientere Lösung hinsichtlich der Kosten dar. Ein Sensor ist billig in der Herstellung und kann einfach verbaut werden. Außerdem bedarf es keinerlei Kommunikation über die SELV-Barriere. Dadurch können weitere Komponenten eingespart und somit Kosten reduziert werden.

Vorzugsweise ist der wenigstens eine Sensor ein Tageslichtsensor, Präsenzsensor oder Infrarotsensor ist.

Das erste Modul kann die Dimminformation basierend auf erfassten Tageslicht bestimmen, und beispielsweise eine höhere Dimmstufe bei weniger erfassten Tageslicht und eine niedrigere Dimmstufe bei mehr erfasstem Tageslicht einstellen. Ein Präsenzsensor kann dazu dienen, dass das erste Modul die Dimmstufe sprungartig erhöhen kann, falls eine Präsenz von beispielweise einer Person oder einem Fahrzeug erfasst wird. Schließlich kann das erste Modul mit einem Infrarotsensor über eine Fernbedienung angesteuert werden.

Vorzugsweise ist das erste Modul und das wenigstens eine zweite Modul in einem Leuchtmodul, vorzugsweise einem LED-Modul, integriert sind, das die Leuchtmittel, vorzugsweise LED-Strecken, umfasst.

Dadurch, dass die Module in das Leuchtmodul integriert sind können sie beispielsweise in der Platine, Leiterplatte oder PCB des Leuchtmoduls ausgebildet werden. Dies ist platzsparend und kostengünstig.

Vorzugsweise sind das erste Modul und das wenigstens eine zweite Modul dazu ausgelegt, über wenigstens eine Thermomanagement- oder Widerstandsauslese-Leitung des Leuchtmoduls zu kommunizieren.

Mehrere Module können seriell oder parallel miteinander verdrahtet werden. Alle zweiten Module können auf einen selben Dimmwert, nämlich den Dimmwert des ersten Moduls, gedimmt werden. Die zweiten Module können auch gemäß abgelegter Tabellen oder vorgegebenen Skalierungsfaktoren jeweils auf einen vom Dimmwert des ersten Moduls abweichenden aber vorbestimmten Dimmwert eingestellt werden. Der Verdrahtungs- und Installationsaufwand ist hierbei minimal. Dadurch kann das Betriebsgerät einfach und kostengünstig hergestellt werden.

Die vorliegende Erfindung betrifft auch eine LED-Leuchte, aufweisend eine LED-Strecke, die ausgehend von der Sekundärseite eines Betriebsgeräts wie vorgehend beschrieben versorgt ist.

Die vorliegende Erfindung betrifft auch ein Verfahren zum Betrieb von Leuchtmitteln, insbesondere einer LED-Strecke, wobei das Verfahren aufweist: Bereitstellung einer elektrischen Versorgung für die Leuchtmittel mittels einer primärseitigen Schaltung und einer sekundärseitigen Schaltung, die durch eine galvanische Trennung voneinander getrennt sind, Einstellen einer Dimmstufe der Leuchtmittel gemäß einer Dimminformation, wobei die sekundärseitige Schaltung eine erstes Modul und wenigstens ein zweites Modul zum Dimmen eines jeweils zugeordneten Leuchtmittels umfasst, und wobei die primärseitige Schaltung eine Dimminformation über einen unidirektionalen oder bidirektionalen drahtlosen Kanal empfängt und an das wenigstens eine zweite Modul weitergibt.

Die vorliegende Erfindung betrifft auch ein Verfahren zum Betrieb von Leuchtmitteln, insbesondere einer LED-Strecke, wobei das Verfahren aufweist: Bereitstellung einer elektrischen Versorgung für die Leuchtmittel mittels einer primärseitigen Schaltung und einer sekundärseitigen Schaltung, die durch eine galvanische Trennung voneinander getrennt sind, Einstellen einer Dimmstufe der Leuchtmittel gemäß einer Dimminformation, wobei die sekundärseitige Schaltung ein erstes Modul und wenigstens ein zweites Modul zum Dimmen eines jeweils zugeordneten Leuchtmittels umfasst, und wobei das erste Modul wenigstens einen Sensor umfasst und eine Dimminformation basierend auf erfasster Sensorinformation bestimmt und die bestimmte Dimminformation an das wenigstens eine zweite Modul weitergibt.

Die LED-Leuchte und die beiden Verfahren zum Betrieb von Leuchtmitteln erzielen dieselben Vorteile, die oben für das Betriebsgerät beschrieben sind.

Die vorliegende Erfindung wird nun anhand der angehängten Figuren genauer beschrieben.
Figur 1 zeigt ein Betriebsgerät gemäß dem Stand der Technik.
Figur 2 zeigt ein Betriebsgerät gemäß einem Ausführungsbeispiel der vorliegenden Erfindung.
Figur 3 zeigt ein Betriebsgerät gemäß einem Ausführungsbeispiel der vorliegenden Erfindung.
Figur 4 zeigt ein Betriebsgerät gemäß einem Ausführungsbeispiel der vorliegenden Erfindung.

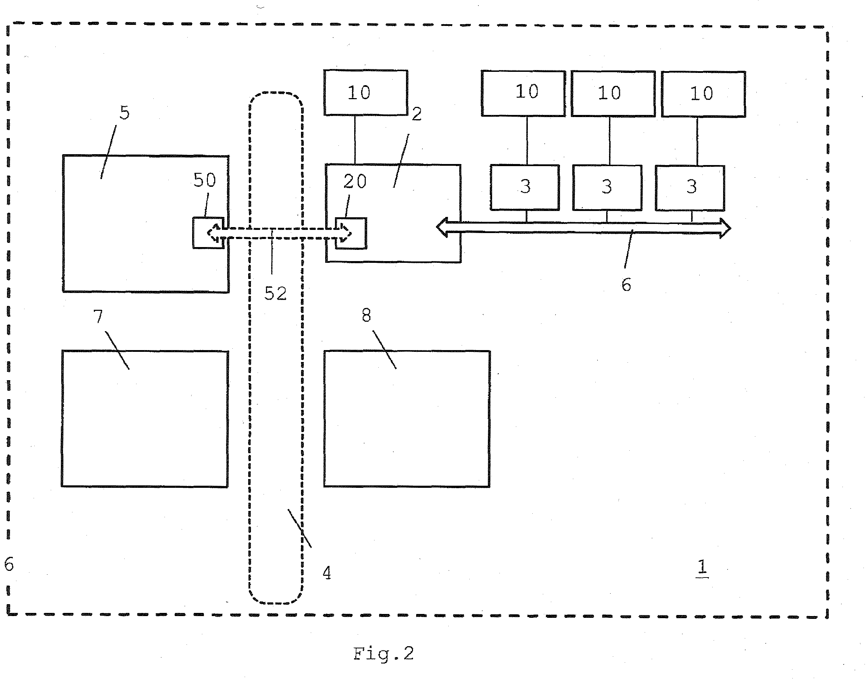

Figur 2 zeigt ein erfindungsgemäßes Betriebsgerät 1 für wenigstens ein Leuchtmittel 10. Das Betriebsgerät 1 kann insbesondere ein LED-Konverter sein, der wenigstens eine LED-Strecke als Leuchtmittel 10 betreibt. Jede LED-Strecke kann dabei eine oder mehrere LEDs aufweisen, die Licht verschiedener oder gleicher Wellenlänge aussenden. Die LEDs einer LED-Strecke können beispielweise aus rot-, grün-, und blau-emittierenden LEDs kombiniert sein, um eine weißleuchtende LED-Strecke zu erzeugen.

Das Betriebsgerät 1 weißt eine Primärseite und eine Sekundärseite auf, die durch eine galvanische Trennung 4 getrennt sind. Auf der Primärseite ist vorzugsweise wenigstens eine primärseitige Schaltung vorgesehen. Dabei befindet sich auf der Primärseite insbesondere wenigstens eine Leistungsfaktor-Korrekturschaltung (PFC) 5, die an einer Spannungsversorgung insbesondere einer Netzspannung hängt und die Sekundärseite des Betriebsgeräts 1 versorgt.

Auf der Primärseite ist vorzugsweise wenigstens eine intelligente Schaltung vorgesehen, wie z.B. ein ASIC, ein Mirkocontroller oder ein integrierter Schaltkreis.

Auf der Sekundärseite befindet sich vorzugsweise ebenfalls wenigstens eine solche intelligente Schaltung 8. Ferner sind auf der Sekundärseite mehrere Module 2 bzw. 3 angeordnet. Vorzugsweise umfasst eine sekundärseitige Schaltung 2, 3 wenigstens ein erstes Modul 2 und wenigstens ein zweites Modul 3. In Figur 2 sind als Beispiel drei zweite Module 3 gezeigt. Alle Module 2, 3 können Konverterstufen sein, die jeweils einem Leuchtmittel 10, zugeordnet sind, das sie dimmen können.

In dem ersten Ausführungsbeispiel, das in Figur 2 gezeigt ist, weist die primärseitige Schaltung 5, die vorzugsweise wenigstens ein PFC umfasst, eine Schnittstelle 50 auf. Das erste Modul 2 weist eine Schnittstelle 20. Die Schnittstellen dienen zur Einrichtung eines unidirektionalen oder bidirektionalen drahtlosen Kanals 52 über die galvanische Trennung 4. Die Schnittstellen 20, 50 können gleiche oder unterschiedliche Antennen sein, die eine Funkverbindung über die galvanische Trennung 4 herstellen. Über den drahtlosen Kanal 52 kann die primärseitige Schaltung 5 mit dem ersten Modul 2 auf der Sekundärseite kommunizieren. Insbesondere, ist das erste Modul 2 dazu ausgelegt, eine Dimminformation über dem drahtlosen Kanal 52 zu empfangen. Die Dimminformation wird im ersten Ausführungsbespiel nur dem ersten Modul 2, das heißt nur einer der sekundärseitig angeordneten Konverterstufen zugeführt. Da die Übertragung der Dimminformation über die galvanische Trennung 4 vorzugsweise mittels Antennen und über Funk erfolgt, ist zur Zuführung der Dimminformation an die Sekundärseite keinerlei Optokoppler oder Transformator notwendig. Dadurch kann eine kostengünstigere Lösung erreicht werden. Zudem wird eine parallele Übertragung an die sekundärseitigen Module 2, 3 vermieden. Dadurch können Komponenten eingespart werden. Ferner können die zweiten Module 3 einfacher konstruiert werden, da sie keine der Schnittstelle 20 entsprechende Schnittstelle benötigen.

Das erste Modul 2 ist in dem Ausführungsbeispiel der Figur 2 mit dem wenigstens einem zweiten Modul 3 über einen lokalen Bus 6 verbunden. Der lokale Bus 6 ist der derart zwischen den mehreren sekundärseitigen Modulen 2, 3 angeordnet, dass die mehreren sekundärseitigen Module miteinander kommunizieren können. Der lokale Bus 6 kann entweder unidirektional oder bidirektional ausgebildet sein. Ist der lokale Bus 6 bidirektional ausgebildet, so können die mehreren sekundärseitigen Module 2, 3 miteinander Dimminformationen austauschen aber auch Betriebsparameter beispielweise zur Rücksendung über den drahtlosen Kanal 52 austauschen. Ist der lokale Bus 6 unidirektional ausgebildet, so kann Information vorzugsweise nur von dem ersten Modul 2 an die zweiten Module 3 übertragen werden. Beispielsweise kann das erste Modul 2 die Dimminformation an die zweiten Module 3 über den Bus 6 übertragen, wobei bevorzugt der Bus 6 mit einem Signal entsprechend der Dimminformation beaufschlagt wird. Die mehreren zweiten Module 3 müssen in diesem Ausführungsbeispiel lediglich empfangen, bzw. die Beaufschlagung auf dem Bus 6 erfassen, aber keine Informationen senden. Daher können die zweiten Module 3 einfacher und kostengünstiger realisiert werden.

Das erste Modul 2 ist demnach ein Master-Modul 2, das als einziges Modul der Sekundärseite die Dimminformation von der Primärseite empfängt. Die zweiten Module 3 sind Slave-Module, die die benötigte Dimminformation von dem Master-Modul erhalten. Die Module, die vorzugsweise Konverterstufen sind, stellen also ein Master-Slave System dar.

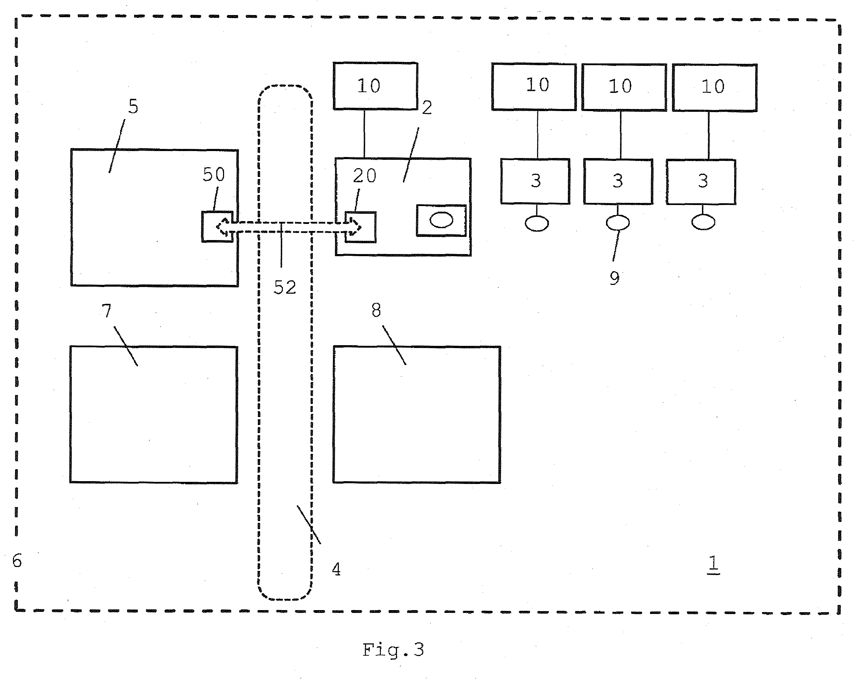

Figur 3 zeigt eine zweite Ausführungsform der vorliegenden Erfindung. Dabei ist der sekundärseitige lokale Bus 6, der das erste Modul 2 mit den wenigstens einem zweiten Modul 3 verbindet, durch eine drahtlose Verbindung 9 zur Kommunikation unter den mehreren sekundärseitigen Modulen 2, 3 ersetzt. Die drahtlose Verbindung 9 kann, wie in Figur 3 gezeigt, von mehreren Antennen eingerichtet werden, wobei jedes Modul 2, 3 eine Antenne aufweist. Die drahtlose Verbindung 9 kann demnach eine Funkverbindung sein. Die Module 2, 3 können auch eine anderweitig gestaltete drahtlose Schnittstellen haben und beispielsweise über WLAN, Bluetooth oder ein ähnliches drahtloses Netzwerk kommunizieren. Wiederum ist es möglich, die Kommunikation über die drahtlose Verbindung 9 bidirektional oder nur direktional von dem ersten Modul 2 an die zweiten Module 3 einzurichten.

Die Antenne 20 des ersten Moduls 2 kann sowohl zur Errichtung des Funkkanals 52 über die galvanische Trennung 4 ausgelegt sein als auch zur Einrichtung der drahtlosen Verbindung 9 ausgelegt sein. Es kann aber auch, wie in Figur 3 gezeigt, eine separate Antenne für die Errichtung der drahtlosen Verbindung 9 an dem ersten Modul 2 vorgesehen sein. Es ist auch möglich, dass mehrere zweite Module 3 miteinander drahtgebunden verbunden sind, aber eine gemeinsame Antenne aufweisen um die drahtlose Verbindung 9 zu dem ersten Modul 2 einzurichten.

In einer alternativen Ausführungsform der vorliegenden Erfindung kommunizieren die Module 2, 3 auf der Sekundärseite leistungsgebunden, wobei ein Beispiel dafür eine Schaltinformation (bspw. AC/Powerline) auf eine DC-Versorgungsspannung der Module 2, 3 ist. Dadurch kann eine separate Kommunikationsverbindung weggelassen werden und es wird nur die gemeinsame sowieso vorhandene Versorgungsspannungsleitung verwendet, um die Dimminformation innerhalb des Master-Slave Subsystems zu übertragen.

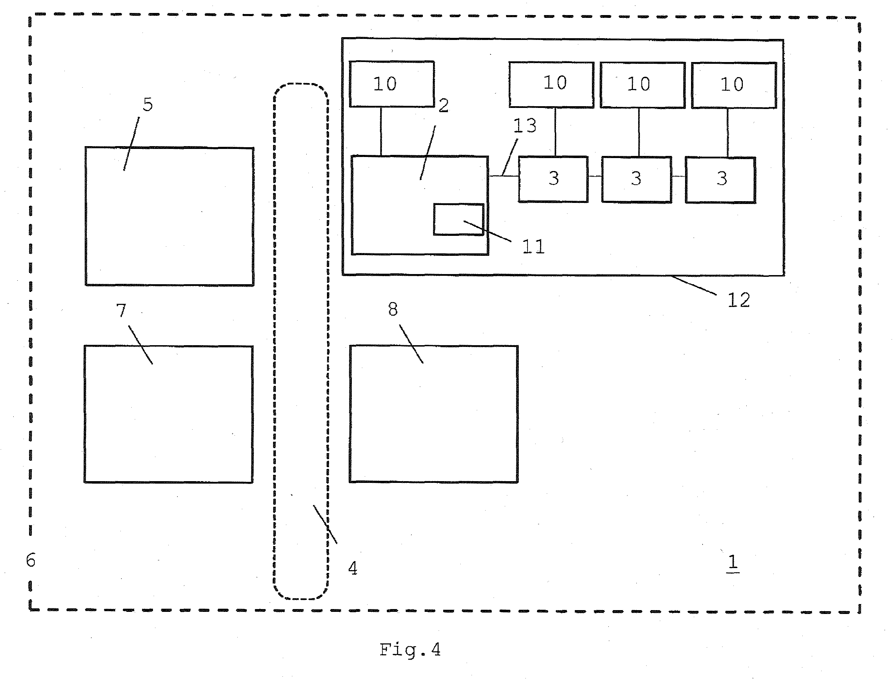

Figur 4 zeigt eine dritte Ausführungsform der vorliegenden Erfindung. Die dritte Ausführungsform ist noch effizienter hinsichtlich der Kosten als die oben beschriebenen Ausführungsformen. Insbesondere sind die Leuchtmittel 10 und die Module 2, 3 auf einem Leuchtmodul 12, vorzugsweise einem LED-Modul integriert. Die Module 2, 3 können auf der Leiterplatte oder dem PCB öder einem Halbleitermaterial des Leuchtmoduls 12 ausgebildet sein. Das erste Modul 2 ist dabei als ein Sensormodul ausgebildet, das heißt es umfasst wenigstens einen Sensor 11. Der wenigstens eine Sensor 11 kann ein Tageslichtsensor, ein Präsenzsensor oder ein Infrarotsensor sein. Der Sensor 11 ist dazu ausgelegt, eine Sensorinformation zu empfangen. Die Sensorinformation ist beispielweise Information bezüglich dem aktuellen Tageslicht, Information über Personen oder Fahrzeuge in der Nähe des Sensors, oder ein Infrarotsignal beispielsweise von einer Fernbedienung.

Das erste Modul 2 ist in dieser Ausführungsform der Erfindung dazu ausgelegt, die erfasste Sensorinformation des Sensors 11 auszulesen und daraus eine Dimminformation zu bestimmen. Die Bestimmung kann selbstständig oder mit Hilfe der intelligenten Schaltung 8 durchgeführt werden, die ein ASIC, Mikrocontroller oder ein integrierter Schaltkreis sein kann. Um die Dimminformation zu erlangen, muss in dieser Ausführungsform der Erfindung das erste Modul 2 nicht über die galvanische Trennung 4 kommunizieren, sondern erlangt die Dimminformation durch externe Signale.

In dieser Ausführungsform, bei der die Module 2, 3 in das Leuchtmodul 12 integriert sind, kann die Kommunikation über Anschlussleitungen und/oder Thermomanagementleitungen oder Widerstandauslesungsleitungen auf der Leiterplatte des Leuchtmoduls 12 durchgeführt werden. Auf der Leiterplatte können mehrere Module 2, 3 seriell oder parallel verdrahtet sein, wofür nur ein minimaler Verdrahtungs- und Installationsaufwand notwendig ist. Wiederum können die mehreren Module 2, 3 als Master-Slave-Lösung ausgestaltet sein. Beispielsweise können das eine oder die mehreren zweiten Module 3 derart ausgelegt sein, dass sie automatisch auf denselben Dimmwert gedimmt werden, welcher dem ersten Modul 2 über die Sensorinformation 11 zugeführt wird. Die Lösung der dritten Ausführungsform der Erfindung ist besonders kostengünstig und platzsparend.

Insgesamt erreicht die vorliegende Erfindung, dass der Sekundärseite eines Betriebsgeräts 1 hinsichtlich einer galvanischen Trennung 4, Dimminformation zugeführt wird, wobei das Betriebsgerät 1 hinsichtlich der Kosten verbessert ist. Insbesondere wird nur einem ersten Modul 2 (einem Master-Modul) die Dimminformation zugeführt, entweder von extern oder über die galvanischen Trennung 4 mittels eines drahtlosen Kanals 52. Das erste Modul 2 ist ferner dazu ausgelegt, die Dimminformation oder andere Betriebsparameter wie eine Sollspannung oder ein Sollstrom zum Betrieb von Leuchtmitteln 10 an wenigstens ein zweites Modul 3 (wenigstens ein Slave-Modul) weiterzugeben. Dies kann entweder durch einen lokalen Bus 6, eine drahtlose Verbindung 9, eine Versorgungsleitung, oder über Leitungen auf einem Leuchtmodul 12 erfolgen. Die vorliegende Erfindung reduziert die Anzahl von nötigen Kommunikationsverbindungen über die galvanische Trennung 4. Ferner sind keine Optokoppler oder Transformatoren nötig. Deshalb kann das Betriebsgerät 1 gemäß den Ausführungsbeispielen der vorliegenden Erfindung kostengünstiger gebaut werden, als ein Betriebsgerät 1 aus dem Stand der Technik.

## Patentansprüche

1. Betriebsgerät (1) für wenigstens ein Leuchtmittel (10), insbesondere Konverter für wenigstens eine LED-Strecke, wobei das Betriebsgerät (1) umfasst
eine Primärseite aufweisend eine primärseitige Schaltung (5) und eine Sekundärseite aufweisend eine sekundärseitigen Schaltung (2, 3), wobei die Primärseite und die Sekundärseite durch eine galvanische Trennung (4) voneinander getrennt sind;
wobei die Leuchtmittel (10) sekundärseitig bzgl. der galvanischen Trennung (4) versorgbar sind und die Primärseite zum Anschluss an eine Spannungsversorgung, insbesondere einer Netzspannung, sowie zur Versorgung der Sekundärseite eingerichtet ist;
wobei die sekundärseitige Schaltung (2, 3) ein erstes Modul (2) und wenigstens ein zweites Modul (3) zum Dimmen eines jeweils zugeordneten Leuchtmittels (10) umfasst;
wobei die primärseitige Schaltung (5) und das erste Modul (2) Schnittstellen (50, 20) aufweisen zur Einrichtung eines unidirektionalen oder bidirektionalen drahtlosen Kanals (52); und
wobei das erste Modul (2) dazu ausgelegt ist, eine Dimminformation über den drahtlosen Kanal (52) zu empfangen;
**dadurch gekennzeichnet, dass**
das erste Modul (2) dazu ausgelegt ist, die empfangene Dimminformation an das wenigstens eine zweite Modul (3) weiterzugeben.

2. Betriebsgerät (1) gemäß Anspruch 1, wobei
zwischen dem ersten Modul (2) und dem wenigstens einen zweiten Modul (3) ein lokaler Bus (6) zum Kommunizieren des ersten Moduls (2) mit dem wenigstens einen zweiten Modul (3) angeordnet ist.

3. Betriebsgerät (1) gemäß Anspruch 2, wobei
das erste Modul (2) dazu ausgelegt ist, den Bus (6) mit der Dimminformation zu beaufschlagen.

4. Betriebsgerät (1) gemäß Anspruch 1, wobei
zwischen dem ersten Modul (2) und dem wenigstens einen zweiten Modul (3) eine drahtlose Verbindung (9) zum Kommunizieren des ersten Moduls (2) mit dem wenigstens einen zweiten Modul (3) eingerichtet ist.

5. Betriebsgerät (1) gemäß einem der Ansprüche 1 bis 4, wobei
der Bus (6) bzw. die drahtlose Verbindung (9) zur unidirektionalen Kommunikation von dem ersten Modul (2) zu dem wenigstens einen zweiten Modul (3) ausgelegt ist.

6. Betriebsgerät (1) gemäß einem der Ansprüche 1 bis 4, wobei
der Bus (6) bzw. die drahtlose Verbindung (9) zur bidirektionalen Kommunikation zwischen dem ersten Modul (2) und dem wenigstens einen zweiten Modul (3) ausgelegt ist.

7. Betriebsgerät (1) gemäß Anspruch 6, wobei
das erste Modul (2) und das wenigstens eine zweite Modul (3) dazu ausgelegt sind, die Dimminformation und/oder wenigstens einen Betriebsparameter auszutauschen.

8. Betriebsgerät (1) gemäß Anspruch 1, wobei
das erste Modul (2) und das wenigstens eine zweite Modul (3) dazu ausgelegt sind, leistungsgebunden zu kommunizieren.

9. Betriebsgerät (1) gemäß Anspruch 8, wobei
die leistungsgebundene Kommunikation über eine Schaltinformation auf einer Versorgungsspannung des ersten Moduls (2) und des wenigstens einen zweiten Moduls (3) erfolgt.

10. Betriebsgerät (1) gemäß einem der Ansprüche 1 bis 9, wobei
das erste Modul (2) und das wenigstens eine zweite Modul (3) Konverterstufen sind.

11. Betriebsgerät (1) gemäß einem der Ansprüche 1 bis 10, wobei
der drahtlose Kanal (52) ein Funkkanal ist, der durch Funkschnittstellen (20, 50) eingerichtet ist.

12. Betriebsgerät (1) gemäß Anspruch 11, wobei
der Funkkanal (52) innerhalb eines vorzugsweise metallischen Gehäuses (6) des Betriebsgeräts (1) liegt.

13. Betriebsgerät (1) für wenigstens ein Leuchtmittel (10), insbesondere Konverter für wenigstens eine LED-Strecke, wobei das Betriebsgerät (1) umfasst
eine Primärseite aufweisend eine primärseitige Schaltung (5) und eine Sekundärseite aufweisend eine sekundärseitige Schaltung (2, 3), wobei die Primärseite und die Sekundärseite durch eine galvanische Trennung (4) voneinander getrennt sind;
wobei die Leuchtmittel (10) sekundärseitig bzgl. der galvanischen Trennung (4) versorgbar sind und die Primärseite zum Anschluss an eine Spannungsversorgung, insbesondere einer Netzspannung, sowie zur Versorgung der Sekundärseite eingerichtet ist; und
wobei die sekundärseitige Schaltung (2, 3) ein erstes Modul (2) und wenigstens ein zweites Modul (3) zum Dimmen eines jeweils zugeordneten Leuchtmittels (10) umfasst;
**dadurch gekennzeichnet, dass**
das erste Modul (2) wenigstens einen Sensor (11) umfasst und dazu ausgelegt ist, eine Dimminformation basierend auf erfasster Sensorinformation zu bestimmen und die bestimmte Dimminformation an das wenigstens eine zweite Modul (3) weiterzugeben.

14. Betriebsgerät (1) gemäß Anspruch 13 wobei der wenigstens eine Sensor (11) ein Tageslichtsensor, Präsenzsensor oder Infrarotsensor ist.

15. Betriebsgerät (1) gemäß Anspruch 13 oder 14, wobei
das erste Modul (2) und das wenigstens eine zweite Modul (3) in einem Leuchtmodul (12), vorzugsweise einem LED-Modul, integriert sind, das die Leuchtmittel (10), vorzugsweise LED-Strecken, umfasst.

16. Betriebsgerät (1) gemäß Anspruch 15, wobei
das erste Modul (2) und das wenigstens eine zweite Modul (3) dazu ausgelegt ist, über wenigstens eine Thermomanagement- oder Widerstandsauslese-Leitung (13) des Leuchtmoduls (12) zu kommunizieren.

17. Verfahren zum Betrieb (1) von Leuchtmitteln (10), insbesondere einer LED-Strecke, wobei das Verfahren aufweist:
- Bereitstellung einer elektrischen Versorgung für die Leuchtmittel (10) mittels einer primärseitigen Schaltung (5) und einer sekundärseitigen Schaltung (2, 3) eines Betriebsgerätes (1), wobei das Betriebsgerät (1) eine Primärseite aufweisend die primärseitige Schaltung (5) und eine Sekundärseite aufweisend die sekundärseitige Schaltung (2, 3) umfasst und die Primärseite und die Sekundärseite durch eine galvanische Trennung (4) voneinander getrennt sind;
- Einstellen einer Dimmstufe der Leuchtmittel (10) gemäß einer Dimminformation;
wobei die sekundärseitige Schaltung (2, 3) ein erstes Modul (2) und wenigstens ein zweites Modul (3) zum Dimmen eines jeweils zugeordneten Leuchtmittels (10) umfasst;
wobei die primärseitige Schaltung (5) und das erste Modul (2) Schnittstellen (50, 20) aufweisen zur Einrichtung eines unidirektionalen oder bidirektionalen drahtlosen Kanals (52); und
wobei das erste Modul (2) die Dimminformation über den unidirektionalen oder bidirektionalen drahtlosen Kanal (52) empfängt;
**dadurch gekennzeichnet, dass**
das erste Modul (2) die empfangene Dimminformation an das wenigstens eine zweite Modul (3) weitergibt.

18. Verfahren zum Betrieb (1) von Leuchtmitteln (10), insbesondere einer LED-Strecke, wobei das Verfahren aufweist:
- Bereitstellung einer elektrischen Versorgung für die Leuchtmittel (10) mittels einer primärseitigen Schaltung (5) und einer sekundärseitigen Schaltung (2, 3) eines Betriebsgerätes (1), wobei das Betriebsgerät (1) eine Primärseite aufweisend die primärseitige Schaltung (5) und eine Sekundärseite aufweisend die sekundärseitige Schaltung (2, 3) umfasst und die Primärseite und die Sekundärseite durch eine galvanische Trennung (4) voneinander getrennt sind;
- Einstellen einer Dimmstufe der Leuchtmittel (10) gemäß einer Dimminformation;
wobei die sekundärseitige Schaltung (2, 3) ein erstes Modul (2) und wenigstens ein zweites Modul (3) zum Dimmen eines jeweils zugeordneten Leuchtmittels (10) umfasst; und
**dadurch gekennzeichnet, dass**
das erste Modul (2) wenigstens einen Sensor (11) umfasst und die Dimminformation basierend auf erfasster Sensorinformation bestimmt und die bestimmte Dimminformation an das wenigstens eine zweite Modul (3) weitergibt.

## Claims

1. An operating device (1) for at least one lighting means (10), in particular, a converter for at least one LED section, wherein the operating device (1) comprises
a primary side having a primary-side circuit (5) and a secondary side having a secondary-side circuit (2, 3), wherein the primary side and the secondary side are separated from one another by a galvanic isolation (4);
wherein the lighting means (10) can be supplied on the secondary side with respect to the galvanic isolation (4) and the primary side is arranged for the connection to a voltage supply, in particular, to a power supply voltage, as well as for the supply of the secondary side;
wherein the secondary side circuit (2, 3) comprises a first module (2) and at least a second module (3) for the dimming of a respectively associated lighting means (10);
wherein the primary-side circuit (5) and the first module (2) have interfaces (50, 20) for the arrangement of a unidirectional or bidirectional wireless channel (52); and
wherein the first module (2) is designed to receive dimming information via the wireless channel (52);
**characterized in that**
the first module (2) is designed to transmit the received dimming information to the at least one second module (3).

2. An operating device (1) according to Claim 1, wherein
between the first module (2) and the at least one second module (3) a local bus (6) is arranged for the communication of the first module (2) with the at least one second module (3).

3. An operating device (1) according to Claim 2, wherein
the first module (2) is designed to act upon the bus (6) with the dimming information.

4. An operating device (1) according to Claim 1, wherein
a wireless connection (9) for the communication of the first module (2) with the at least one second module (3) is arranged between the first module (2) and the at least one second module (3).

5. An operating device (1) according to any one of Claims 1 to 4, wherein
the bus (6) or the wireless connection (9) is designed for the unidirectional communication from the first module (2) to the at least one second module (3).

6. An operating device (1) according to any one of Claims 1 to 4, wherein
the bus (6) or the wireless connection (9) is designed for the bidirectional communication between the first module (2) and the at least one second module (3).

7. An operating device (1) according to Claim 6, wherein
the first module (2) and the at least one second module (3) are designed to exchange dimming information and/or at least one operating parameter.

8. An operating device (1) according to Claim 1, wherein
the first module (2) and the at least one second module (3) are designed to communicate wire-connected.

9. An operating device (1) according to Claim 8, wherein
the wire-connected communication is carried out via switching information on a supply voltage of the first module (2) and of the at least one second module (3).

10. An operating device (1) according to any one of claims 1 to 9, wherein
the first module (2) and the at least one second module (3) are converter steps.

11. An operating device (1) according to any one of Claims 1 to 10, wherein
the wireless channel (52) is a radio channel, which is arranged through radio interfaces (20, 50).

12. An operating device (1) according to Claim 11, wherein
the radio channel (52) is located within a preferably metallic housing (6) of the operating device (1).

13. An operating device (1) for at least one lighting means (10), in particular, a converter for at least one LED section, wherein the operating device (1) comprises
a primary side having a primary-side circuit (5) and a secondary side having a secondary-side circuity (2, 3), wherein the primary side and the secondary side are separated from one another by a galvanic isolation (4);
wherein the lighting means (10) can be supplied on the secondary side with respect to the galvanic isolation (4) and the primary side is arranged for the connection to a voltage supply, in particular, to a power supply voltage, as well as for the supply of the secondary side; and
wherein the secondary side circuit (2, 3) comprises a first module (2) and at least a second module (3) for the dimming of a respectively associated lighting means (10);
**characterized in that**
the first module (2) comprises at least one sensor (11) and is designed to determine dimming information based on acquired sensor information and to transmit the determined dimming information to the at least one second module (3).

14. An operating device (1) according to Claim 13 wherein the at least one sensor (11) is a daylight sensor, presence sensor or infrared sensor.

15. An operating device (1) according to Claim 13 or 14, wherein the first module (2) and the at least one second module (3) are integrated in a lighting module (12), preferably an LED module, which comprises the lighting means (10), preferably LED sections.

16. An operating device (1) according to Claim 15, wherein
the first module (2) and the at least one second module (3) is designed to communicate via at least one thermo-management- or resistance read-out line (13) of the lighting module (12).

17. A method for the operation (1) of lighting means (10), in particular, of a LED section, wherein the method has:
- providing an electrical supply for the lighting means (10) by means of a primary-side circuit (5) and a secondary-side circuit (2, 3) of an operating device (1), wherein the operating device (1), comprises a primary side having the primary-side circuit (5) and a secondary side having the secondary-side circuit (2, 3) and the primary side and the secondary side are separated from one another by a galvanic isolation (4);
- adjusting a dimming step of the lighting means (10) according to dimming information;
wherein the secondary-side circuit (2, 3) comprises a first module (2) and at least one second module (3) for dimming a respectively associated lighting means (10);
wherein the primary-side circuit (5) and the first module (2) have interfaces (50, 20) for arranging a unidirectional or bidirectional wireless channel (52); and
wherein the first module (2) receives the dimming information via the unidirectional or bidirectional wireless channel (52);
**characterized in that**
the first module (2) transmits the received dimming information to the at least one second module (3).

18. A method for the operation (1) of lighting means (10), in particular, a LED section, wherein the method has:
- providing an electrical supply for the lighting means (10) by means of a primary-side circuit (5) and a secondary-side circuit (2, 3) of an operating device (1), wherein the operating device (1) comprises a primary side having the primary-side circuit (5) and a secondary side having the secondary-side circuit (2, 3) and the primary side and the secondary side are separated from one another by a galvanic isolation (4):
- adjusting a dimming step of the lighting means (10) according to dimming information;
wherein the secondary-side circuit (2, 3) comprises a first module (2) and at least one second module (3) for dimming a respectively associated lighting means (10); and
**characterized in that**
the first module (2) comprises at least one sensor (11) and determines the dimming information based on acquired sensor information and transmits the determined dimming information to the at least one second module (3).

## Revendications

1. Appareil de commande (1) pour au moins un moyen d'éclairage (10), en particulier convertisseur pour au moins une rangée de DEL, l'appareil de commande (1) comprenant
un côté primaire présentant un circuit (5) côté primaire, et un côté secondaire présentant un circuit (2, 3) côté secondaire, le côté primaire et le côté secondaire étant séparés l'un de l'autre par une séparation galvanique (4) ;
les moyens d'éclairage (10) pouvant être alimentés côté secondaire par rapport à la séparation galvanique (4), et le côté primaire étant agencé pour la connexion à une alimentation en tension, en particulier une tension de secteur, ainsi que pour l'alimentation du côté secondaire ;
le circuit (2, 3) côté secondaire comprenant un premier module (2) et au moins un deuxième module (3) pour la gradation d'un moyen d'éclairage (10) respectivement affecté ;
le circuit (5) côté primaire et le premier module (2) présentant des interfaces (50, 20) pour l'agencement d'un canal sans fil (52) unidirectionnel ou bidirectionnel ; et
le premier module (2) étant conçu pour recevoir une information de gradation par le biais du canal sans fil (52) ;
**caractérisé en ce que**
le premier module (2) est conçu pour transmettre l'information de gradation au deuxième module (3) au moins au nombre de un.

2. Appareil de commande (1) selon la revendication 1,
un bus (6) local étant disposé entre le premier module (2) et le deuxième module (3) au moins au nombre de un pour la communication du premier module (2) avec le deuxième module (3) au moins au nombre de un.

3. Appareil de commande (1) selon la revendication 2,
le premier module (2) étant conçu pour fournir au bus (6) l'information de gradation.

4. Appareil de commande (1) selon la revendication 1,
un raccordement sans fil (9) étant agencé entre le premier module (2) et le deuxième module (3) au moins au nombre de un pour la communication du premier module (2) avec le deuxième module (3) au moins au nombre de un.

5. Appareil de commande (1) selon l'une des revendications 1 à 4,
le bus (6) ou respectivement le raccordement sans fil (9) étant conçu pour la communication unidirectionnelle à partir du premier module (2) vers le deuxième module (3) au moins au nombre de un.

6. Appareil de commande (1) selon l'une des revendications 1 à 4,
le bus (6) ou respectivement le raccordement sans fil (9) étant conçu pour la communication bidirectionnelle entre le premier module (2) et le deuxième module (3) au moins au nombre de un.

7. Appareil de commande (1) selon la revendication 6,
le premier module (2) et le deuxième module (3) au moins au nombre de un étant conçus pour échanger l'information de gradation et/ou au moins un paramètre de fonctionnement.

8. Appareil de commande (1) selon la revendication 1,
le premier module (2) et le deuxième module (3) au moins au nombre de un étant conçus pour communiquer de façon câblée.

9. Appareil de commande (1) selon la revendication 8,
la communication câblée s'effectuant par le biais d'une information de commutation sur une alimentation en tension du premier module (2) et du deuxième module (3) au moins au nombre de un.

10. Appareil de commande (1) selon l'une des revendications 1 à 9,
le premier module (2) et le deuxième module (3) au moins au nombre de un étant des étages de convertisseur.

11. Appareil de commande (1) selon l'une des revendications 1 à 10,
le canal sans fil (52) étant un canal radio qui est agencé par des interfaces (20, 50).

12. Appareil de commande (1) selon la revendication 11,
le canal radio (52) étant situé à l'intérieur d'un boîtier (6) de préférence métallique de l'appareil de commande (1).

13. Appareil de commande (1) pour au moins un moyen d'éclairage (10), en particulier convertisseur pour au moins une rangée de DEL, l'appareil de commande (1) comprenant
un côté primaire présentant un circuit (5) côté primaire, et un côté secondaire présentant un circuit (2, 3) côté secondaire, le côté primaire et le côté secondaire étant séparés l'un de l'autre par une séparation galvanique (4) ;
les moyens d'éclairage (10) pouvant être alimentés côté secondaire par rapport à la séparation galvanique (4), et le côté primaire étant agencé pour la connexion à une alimentation en tension, en particulier une tension de secteur, ainsi que pour l'alimentation du côté secondaire ; et
le circuit (2, 3) côté secondaire comprenant un premier module (2) et au moins un deuxième module (3) pour la gradation d'un moyen d'éclairage (10) respectivement affecté ;
**caractérisé en ce que**
le premier module (2) comprend au moins un capteur (11) et est conçu pour définir une information de gradation sur la base d'une information de capteur détectée et pour transmettre l'information de gradation définie sur le deuxième module (3) au moins au nombre de un.

14. Appareil de commande (1) selon la revendication 13, le capteur (11) au moins au nombre de un étant un capteur de lumière du jour, un capteur de présence ou un capteur infrarouge.

15. Appareil de commande (1) selon la revendication 13 ou 14,
le premier module (2) et le deuxième module (3) au moins au nombre de un étant intégrés dans un module d'éclairage (12), de préférence un module de DEL, qui comprend les moyens d'éclairage (10), de préférence les rangées de DEL.

16. Appareil de commande (1) selon la revendication 15,
le premier module (2) et le deuxième module (3) au moins au nombre de un étant conçus pour communiquer par le biais d'au moins une ligne de gestion thermique ou de lecture de résistance (13) du module d'éclairage (12).

17. Procédé de fonctionnement (1) de moyens d'éclairage (10), en particulier d'une rangée de DEL, le procédé présentant :
- la fourniture d'une alimentation électrique pour les moyens d'éclairage (10) au moyen d'un circuit (5) côté primaire et d'un circuit (2, 3) côté secondaire d'un appareil de commande (1), l'appareil de commande (1) comprenant un côté primaire présentant le circuit (5) côté primaire et un côté secondaire présentant le circuit (2, 3) côté secondaire, et le côté primaire et le côté secondaire étant séparés l'un de l'autre par une séparation galvanique (4) ;
- le réglage d'un niveau de gradation des moyens d'éclairage (10) selon une information de gradation ;
le circuit (2, 3) côté secondaire comprenant un premier module (2) et au moins un deuxième module (3) pour la gradation d'un moyen d'éclairage (10) affecté respectivement ;
le circuit (5) côté primaire et le premier module (2) présentant des interfaces (50, 20) pour l'aménagement d'un canal sans fil (52) unidirectionnel ou bidirectionnel ; et
le premier module (2) recevant l'information de gradation par le biais du canal sans fil (52) unidirectionnel ou bidirectionnel ;
**caractérisé en ce que**
le premier module (2) transmet l'information de gradation reçue au deuxième module (3) au moins au nombre de un.

18. Procédé de fonctionnement (1) de moyens d'éclairage (10), en particulier d'une rangée de DEL, le procédé présentant :
- la fourniture d'une alimentation électrique pour les moyens d'éclairage (10) au moyen d'un circuit (5) côté primaire et d'un circuit (2, 3) côté secondaire d'un appareil de commande (1), l'appareil de commande (1) comprenant un côté primaire présentant le circuit (5) côté primaire et un côté secondaire présentant le circuit (2, 3) côté secondaire, et le côté primaire et le côté secondaire étant séparés l'un de l'autre par une séparation galvanique (4) ;
- le réglage d'un niveau de gradation des moyens d'éclairage (10) selon une information de gradation ;
le circuit (2, 3) côté secondaire comprenant un premier module (2) et au moins un deuxième module (3) pour la gradation d'un moyen d'éclairage (10) affecté respectivement ;
**caractérisé en ce que**
le premier module (2) comprend au moins un capteur (11) et définit l'information de gradation sur la base de l'information de capteur détectée et transmet l'information de gradation définie au deuxième module (3) au moins au nombre de un.
